(19) **Europäisches Patentamt**
**European Patent Office**
**Office européen des brevets**

(11) **EP 2 372 332 B1**

(12) **EUROPEAN PATENT SPECIFICATION**

(45) Date of publication and mention
of the grant of the patent:
**06.09.2017 Bulletin 2017/36**

(51) Int Cl.:
*G01M 11/00* *(2006.01)*     *H04B 10/079* *(2013.01)*

(21) Application number: **10290170.9**

(22) Date of filing: **31.03.2010**

(54) **Method for determining a chromatic dispersion of an optical channel**

Verfahren zur Bestimmung einer chromatischen Dispersion eines optischen Kanals

Procédé pour déterminer la dispersion chromatique d'un canal optique

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**05.10.2011 Bulletin 2011/40**

(73) Proprietor: **ALCATEL LUCENT**
**92100 Boulogne-Billancourt (FR)**

(72) Inventors:
• **Weisser, Stefan**
**90409 Nürnberg (DE)**

• **Leven, Andreas**
**74321 Bietigheim-Bissingen (DE)**

(74) Representative: **Wetzel, Emmanuelle**
**Alcatel-Lucent**
**Intellectual Property Business Group**
**70430 Stuttgart (DE)**

(56) References cited:
EP-A1- 1 645 861        EP-A1- 1 655 592
EP-A2- 1 160 559        WO-A1-03/092194
US-A- 5 406 368         US-A- 6 088 088
US-A1- 2003 123 884     US-A1- 2005 110 981
US-A1- 2006 109 452     US-A1- 2009 297 140

## Description

### Field of the invention

The invention relates to a method of determining a dispersion of an optical channel.

### Background

When transmitting an optical signal via an optical channel with chromatic dispersion, different signal components of the optical signal having different frequencies are subject to different propagation times caused by the optical channel.

The propagation time caused by the dispersive optical channel is a function of the chromatic dispersion. Thus, for determining the transfer function of the optical channel, the chromatic dispersion has to be determined. The optical signal can then be filtered by the inverse transfer function of the optical channel for compensating the different propagation times of different frequencies caused by the optical channel.

The document US 6,088,088 discloses a method of chromatic dispersion measurement. dispersive characteristics of optical components. The scheme includes modulation phase shift measurements performed on modulated optical carriers where the carrier frequency and the modulation frequency of the modulated optical carriers are adjusted to maintain a reference modulation sideband. A reference phase term is established by the reference modulation sideband in each of the modulation phase shift measurements. Phase indices of refraction at discrete optical frequencies of non-reference modulation sidebands are extracted from the modulation phase shift measurements. The extracted phase indices are used to calculate chromatic dispersion.

### Summary

A method of determining a chromatic dispersion of an optical channel is proposed. The method comprises different steps according to claim 1. An optical signal that is transmitted via an optical transmission channel is received. The optical signal is sampled , such that a first set of sampling data is obtained.

For the first set of sampling data, a frequency analysis via a spectral transform is carried out, such that a frequency component at a first frequency and frequency component at a second frequency is determined. The second frequency is chosen such that it differs from the first frequency by the symbol rate of the optical signal.

Furthermore, a phase shift of a spectral density is determined, wherein the spectral density is based on the determined frequency components at the first frequency.

Finally, a chromatic dispersion value of the optical transmission channel is determined based on the determined phase shift.

By choosing the second frequency, such that it differs from the first frequency by the symbol rate, it is possible to obtain from the frequency components of the sampled optical signal complex spectral density values, which contain a phase that is caused only by the phase of the transfer function of the optical transmission channel. Thus, if a relationship between the phase of the transfer function of the optical channel and the chromatic dispersion of the optical channel is known, an estimate for the chromatic dispersion can be obtained.

### Brief description of the drawings

Figure 1 shows a discrete spectrum of a sampled signal.

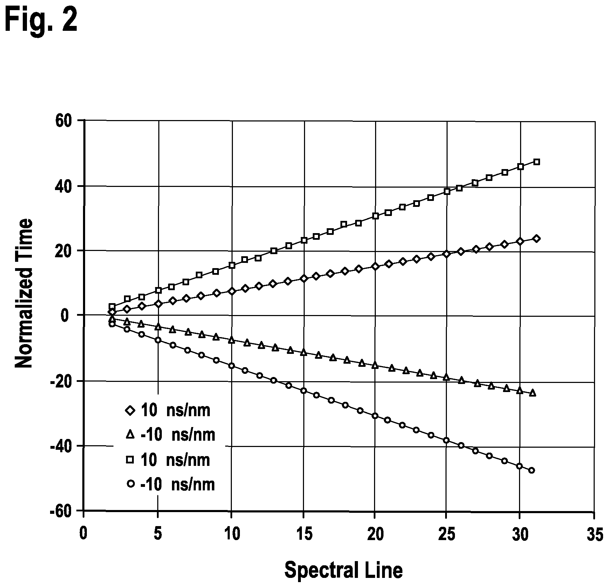

Figure 2 shows normalized time delays versus spectral indices corresponding to discrete frequency values.

Figure 3 shows determined chromatic dispersion values in comparison to actual chromatic dispersion values, as well as the error between the determined and the actual dispersion values.

Figure 4 shows a device for determining a chromatic dispersion of an optical channel according to an embodiment.

Figure 5 shows a device for determining a chromatic dispersion of an optical channel according to a further embodiment.

### Description of embodiments

When transmitting a real-valued time signal, $s(t)$ via a an optical channel having a transmission function $h_D(t)$ in the time domain, the resulting signal x(t) is given by

$$x(t) = s(t) * h_D(t) ,$$

which in the frequency domain corresponds to

$$X(f) = S(f) \cdot H_D(f) .$$

For a dispersive transmission channel, the transfer function in the frequency domain is typically given by

$$H_D(f) = \exp\left(-j\frac{\pi}{2}C\left[\frac{f}{f_{SR}}\right]^2\right)$$

wherein C is the chromatic dispersion of the transmission channel and wherein $f_{SR}$ is the symbol rate of the optical signal.
A modulated signal $s(t)$ can be expressed in the frequency domain as

$$S(f) = G(f)\sum_k a_k \exp\left(-j2\pi f kT\right)$$

wherein $G(f)$ is the spectrum of a pulse function. Furthermore, $a_k$ is the modulation value, which for example for a Phase Shift Modulation such as Binary Phase Shift Keying takes on the real values $a_k = \{-1,+1\}$ . The symbol rate of the signal is $f_{SR} = 1/T$. The frequency index is $k \in$ N.
From the received signal, one can determine the term

$$X(f_1) \cdot X^*(f_2) = S(f_1) \cdot S^*(f_2) \cdot H_D(f_1) \cdot H_D^{\ *}(f_2) ,$$

wherein $f_1$ and $f_2$ are chosen frequencies, and wherein $X^*(f)$ is the conjugate complex of $X(f)$.
Examining the term $S(f_1) \cdot S^*(f_2)$, one can derive that this term becomes a real valued term with a phase of 0 for the choice of $f_2 = f_1 - f_{SR}$. Looking at

$$S(f_1)\ S^*(f_2) = G(f_1)G^*(f_2)\sum_k a_k \exp\left(-j2\pi f_1 k\frac{1}{f_{SR}}\right)\sum_k a_k^* \exp\left(+j2\pi f_2 k\frac{1}{f_{SR}}\right)$$

and taking into account that $G(f_1) \cdot G^*(f_2)$ is a real valued spectral density, the phase of $S(f_1) \cdot S^*(f_2)$ is for the choice of $f_2 = f_1 - f_{SR}$ equal to

$$\arg\left(S(f_1)\ S^*(f_2)\right) = \arg\left(\sum_k a_k \exp\left(-j2\pi f_1 k\frac{1}{f_{SR}}\right)\sum_k a_k^* \exp\left(+j2\pi(f_1-f_{SR})k\frac{1}{f_{SR}}\right)\right).$$

The phase finally degenerates for the choice of $f_2 = f_1 - f_{SR}$ to

$$\arg\!\left(S(f_1)\;S^*(f_2)\right)=\arg\!\left(\sum_k \exp\!\left(-j\,2\pi\,f_1\,k\,\frac{1}{f_{SR}}\right)\sum_k \exp\!\left(+j\,2\pi\,(f_1-f_{SR})\,k\,\frac{1}{f_{SR}}\right)\right)$$

$$=\arg\!\left(\sum_k \exp\!\left(-j\,2\pi\,f_1\,k\,\frac{1}{f_{SR}}\right)\sum_k \exp\!\left(+j\,2\pi\,f_1\,k\,\frac{1}{f_{SR}}\right)\exp\!\left(+j\,2\pi\,f_{SR}\,k\,\frac{1}{f_{SR}}\right)\right)$$

$$=\arg\!\left(\sum_k \exp\!\left(-j\,2\pi\,f_1\,k\,\frac{1}{f_{SR}}\right)\sum_k \exp\!\left(+j\,2\pi\,f_1\,k\,\frac{1}{f_{SR}}\right)\exp\!\left(+j\,2\pi\,k\,\frac{f_{SR}}{f_{SR}}\right)\right)$$

$$=\arg\!\left(\sum_k \exp\!\left(-j\,2\pi\,f_1\,k\,\frac{1}{f_{SR}}\right)\sum_k \exp\!\left(+j\,2\pi\,f_1\,k\,\frac{1}{f_{SR}}\right)\right)$$

$$=0$$

Thus, when determining the phase of the term

$$X(f_1)\cdot X^*(f_2)=S(f_1)\cdot S^*(f_2)\cdot H_D(f_1)\cdot H_D^{\,*}(f_2)$$

all that remains is

$$\arg\!\left(X(f_1)\cdot X^*(f_2)\right)=\arg\!\left(H_D(f_1)\cdot H_D^{\,*}(f_2)\right).$$

Using the transfer function

$$H_D(f)=\exp\!\left(-j\,\frac{\pi}{2}\,C\!\left[\frac{f}{f_{SR}}\right]^2\right)$$

it directly follows that one arrives at

$$\arg\!\left(X(f_1)\cdot X^*(f_2)\right)=-j\,\pi\,C\!\left[\frac{f_1}{f_{SR}}-\frac{1}{2}\right].$$

Thus, by taking the phase of the term $X(f_1)\cdot X^*(f_2)$ derived from the received signal $x(t)$ for the choice of $f_2 = f_1 - f_{SR}$, it is possible to estimate the chromatic dispersion value C of the optical transmission channel.

Furthermore, since the transfer function of an optical channel with chromatic dispersion can be interpreted as a frequency response

$$H_D(f)=\exp\!\left(-j\,2\pi\,f\,\tau(C,f)\right)$$

introducing a time delay $\tau(C,f)$ that depends on the frequency $f$ and the dispersion C, it is possible to derive from an estimated dispersion value C an estimate of the time delay $\tau(C,f)$.

Therefore, it is an aim of the proposed method to determine an estimate of the chromatic dispersion C based on the received signal $x(t)$.

After transmission of the signal $s(t)$ via the optical transmission channel the signal $x(t)$ is received, which then is sampled at a sampling rate $f_{SA}$ leading to a set of sampling data as

$$x(n) \quad , n = 0 \ldots N-1 , N \in \mathrm{N} \ ,$$

wherein $n$ is the discrete time-index of the sets of sampling data and wherein N is the size of the set of sampling data. The symbol rate $f_{SR}$ of the optical signal is defined by the number of samples $x(n)$ representing a transmitted symbol. For a sampling frequency of 80 GHz, a typical value is to have two samples forming a symbol such that the symbol rate $f_{SR}$ is half of the sampling rate $f_{SA}$.

Using the discrete Fourier transform (DFT), a frequency analysis is carried out for the set of sampling data of $x(n)$, yielding the complex discrete frequency values

$$X(k) = DFT(x(n)) ,$$

wherein the frequency index is typically chosen as $k = 0 \ldots N$.

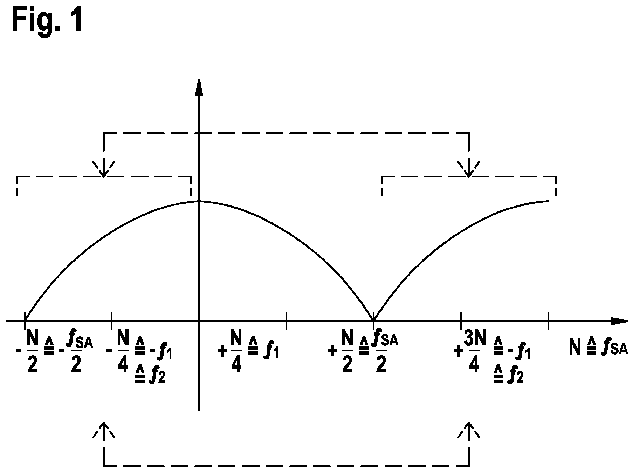

Figure 1 depicts the discrete spectrum of a sampled signal. The discrete frequency index $k = N$ corresponds to the sampling frequency $f_{SA}$, while for the case of 2 samples representing a symbol, the symbol rate $f_{SR}$ corresponds to the discrete frequency index $k = N / 2$ . It is to be noted that for a discrete spectrum obtained via a DFT, the discrete frequency range $N / 2 < k < N$ represents the negative part of the continuous frequency range $-f_S / 2 < f < 0$ obtained via a Fourier Transform. Therefore, when choosing the first frequency to $N / 4 \equiv f_{SR} / 2 = f_1$ and obeying $f_2 = f_1 - f_{SR}$, the discrete frequency $3N / 4$ represents the continuous frequency $f_2$.

A power-spectral density value $Z_{c1}$ is determined as

$$Z_{c1} = X\left(\frac{N}{4}\right) X^*\left(\frac{3N}{4}\right).$$

As it has been explained above, the phase of $Z_{c1}$ depends only on a phase introduced by the transfer function of the optical channel. Therefore, the expression

$$\arg\left( X\left(\frac{N}{4}\right) X^*\left(\frac{3N}{4}\right) \right) = \arg(Z_{c1}) = \phi$$

provides an estimated phase $\phi$, from which an estimate of a chromatic dispersion value C can be derived. The estimated value C is then used for deriving a filter function

$$H_{filt} = \frac{1}{H_D(f)}$$

that is inverse to the transfer function $H_D(f)$ of the optical channel. The received signal $x(t)$ is then filtered by the filter function for compensating the propagation times caused by the optical channel. This filtering may be performed in the time or in the frequency domain.

According to a preferred embodiment, the signal $s(t)$ is transmitted in a first polarization plane via the optical channel, resulting in the signal $x(t)$. Furthermore, the signal $s(t)$ is transmitted also in a second polarization plane of the optical channel. At the receiving end of the transmission channel, the signal $y(t) = s(t) * h(t)$ is received in the second polarization plane. The received signal $y(t)$ is then sampled at the sampling rate $f_{SA}$ leading to a second set of sampling data as

$$y(n) \quad , n = 0 \ldots N-1 , \quad N \in \mathrm{N} \ .$$

For the second set of sampling data, a frequency analysis is carried out via the Discrete Fourier Transform yielding

$$Y(k) = DFT(y(n)).$$

For obtaining a more reliable estimate for the phase, a power spectral density $Z_{c2}$ is computed as

$$Z_{c2} = Y\left(\frac{N}{4}\right)Y^*\left(\frac{3N}{4}\right).$$

Furthermore, a cross-spectral density $Z_{x1}$ is determined as

$$Z_{x1} = X\left(\frac{N}{4}\right)Y^*\left(\frac{3N}{4}\right)$$

and another cross spectral density $Z_{x2}$ as

$$Z_{x2} = Y\left(\frac{N}{4}\right)X^*\left(\frac{3N}{4}\right).$$

Averaging the two power spectral densities $Z_{c1}$ and $Z_{c2}$ as

$$Z_c = \frac{1}{2}\left[\exp\left[j \arg(Z_{c1})\right] + \exp\left[j \arg(Z_{c2})\right]\right]$$

and also averaging the two cross spectral densities $Z_{x1}$ and $Z_{x2}$ as

$$Z_x = \frac{1}{2}\left[\exp\left[j \arg(Z_x)\right] + \exp\left[j \arg(Z_x)\right]\right]$$

one can then determine the phase as

$$\phi = \arg\left[\frac{1}{2}\left[Z_c + Z_x\right]\right].$$

Averaging the spectral densities via

$$Z_{xy} = \frac{1}{2}\left[\exp\left[j \arg(Z_{xy1})\right] + \exp\left[j \arg(Z_{xy2})\right]\right]$$

instead of averaging them directly via

$$Z_{xy} = \frac{1}{2}\left[Z_{xy1} + Z_{xy2}\right]$$

increases the signal to nose ratio of the obtained averaged spectral densities, leading to a more reliable final estimate of the phase $\phi$ and the chromatic dispersion C. This is due to the fact, that by first taking the argument of each spectral density, the magnitudes of the complex spectral densities are normalized equal to 1, while their phases remain.

The phase $\phi$ determined as described above is an estimate based on the frequencies $f_1$ and $f_2$. In the following, it will be explained, in which way another estimate for a phase based on other frequencies can be obtained and in which way this other estimated phase contributes to an even more reliable estimate of the chromatic dispersion C.

The further discrete frequency

$$N/4 + m \quad , \quad m << N$$

is chosen together with another further discrete frequency

$$3N/4 + m \quad , \quad m << N .$$

Also for these discrete frequencies

$$N/4 + m \equiv f_3 = f_1 + \Delta f$$

and

$$3N/4 + m \equiv f_4 = f_2 + \Delta f ,$$

with $m \equiv \Delta f$, the distance between their corresponding continuous frequencies is

$$f_4 = f_3 - f_{SR} .$$

Therefore, also the phase of the term

$$S\left(\frac{N}{4} + m\right) S^*\left(\frac{3N}{4} + m\right)$$

vanishes.

Therefore, the power spectral densities

$$Z_{c1}(m) = X\left(\frac{N}{4} + m\right) X^*\left(\frac{3N}{4} + m\right) ,$$

$$Z_{c2}(m) = Y\left(\frac{N}{4} + m\right) Y^*\left(\frac{3N}{4} + m\right)$$

and the cross spectral densities

$$Z_{x1}(m) = X\left(\frac{N}{4} + m\right) Y^*\left(\frac{3N}{4} + m\right)$$

$$Z_{x2}(m) = Y\left(\frac{N}{4} + m\right) X^*\left(\frac{3N}{4} + m\right)$$

each have a phase that depends only the phase introduced by the transmission channel.

The spectral densities are then averaged via

$$Z_c(m) = \frac{1}{2}\left[\exp\left[j \arg(Z_{c1}(m))\right] + \exp\left[j \arg(Z_{c2}(m))\right]\right]$$

$$Z_x(m) = \frac{1}{2}\left[\exp\left[j \arg(Z_{x1}(m))\right] + \exp\left[j \arg(Z_{x2}(m))\right]\right]$$

for reliably estimating a further phase $\phi(m)$ as

$$\phi(m) = \arg\left[\frac{1}{2}\left[Z_c(m) + Z_x(m)\right]\right].$$

When choosing as the number of samples $N$ of a sampling set to $N = 1024$, a typical value of $m$ is within the range

$$m = -M \ldots M \quad , \quad M = 32..$$

When choosing the discrete frequency $N/4$ as initially proposed, this is equal to the choice of $m = 0$, leading to an estimate of the phase as $\phi(0)$. Furthermore, by choosing $m = 1$, one obtains another estimated phase $\phi(1)$.

Since it is known, as previously described above, that the phase $\phi$ is a function which is dependent on the dispersion C, the two values $\phi(0)$, $\phi(1)$ can be used for determining the dispersion C, by fitting a function that represents the dependency of the phase from the chromatic dispersion C to these two estimated values via a regression. In the case that the phase is a linear function of the dispersion C, a linear function may be fitted to the estimated phase values via linear regression. Alternatively, the dispersion value C may be determined by fitting a function of higher order to the estimated phase values.

By varying $m = 0$ within the range $m = -M \ldots M$, one can obtain multiple estimates $\phi(m)$, which then contribute via a fitting of a function to these estimates to an even more reliable estimate of the chromatic dispersion C.

One can then derive an estimate for the physical link dispersion D from the equation

$$D = \frac{cN \cdot \hat{C}}{4\pi\lambda^2 B^2}$$

wherein $c$ is the velocity of light, $\lambda$ is the optical wavelength, $B$ is the symbol rate and $N$ is the number of samples.

The fitting of the function to the estimated values of the phase may be formed by minimizing an overall error between the function and the estimated phases $\phi(m)$.

According to a preferred embodiment, the power-spectral densities $Z_{c1}(m)$, $Z_{c2}(m)$ and the cross-spectral densities $Z_{x1}(m)$, $Z_{x2}(m)$ are normalized prior to averaging them via

$$Z_{c1}(m) := Z_{c1}(m) - Z_{c1}(0) \, ,$$

$$Z_{c2}(m) := Z_{c2}(m) - Z_{c2}(0) \, ,$$

$$Z_{x1}(m) := Z_{x1}(m) - Z_{x1}(0) \, ,$$

$$Z_{x2}(m) := Z_{x2}(m) - Z_{x2}(0) \, .$$

For the normalization, the choice of $m = 0$ for choosing the expression $Z(m = 0)$ to which a spectral density $Z(m)$ is normalized is only exemplarily, $m$ may also be chosen to an other value.

By this normalization, the estimated phase at a certain frequency $N/4 + m$ is reduced to the difference of this phase at this frequency and the phase at the frequency $N/4$. This has the advantage, that the subsequent step of averaging yields more reliable estimates with a minimized variance.

Furthermore, in order to provide an estimate of the phase with little variation of the signal-to-noise ratio versus the polarization state of the signal, one can weight the averaged power-spectral density $Z_c(m)$ and the averaged cross-spectral density $Z_x(m)$ by individual weighting-factors $w_c$ and $w_x$, which can be determined as

$$w_c = \frac{1}{4N} \cdot \sum_{m=-M}^{M} [|Z_{c1}(m)| + |Z_{c2}(m)|],$$

$$w_x = \frac{1}{4N} \cdot \sum_{m=-M}^{M} [|Z_{x1}(m)| + |Z_{x2}(m)|]$$

leading to

$$\phi(m) = \arg\left[\frac{1}{2}[w_c Z_c(m) + w_x Z_x(m)]\right].$$

Furthermore, in order to take into account also phase components lying out of the range of 0 ... $f_{SA} \equiv 0...N$ one can determine the phase $\phi(m)$ as

$$\phi(m) = unwrap\left(\arg\left[\frac{1}{2}[Z_c(m) + Z_x(m)]\right]\right)$$

for increasing the reliability of the estimated phase.

In order to reduce the variance of the estimated phases, the estimation is based on further sets of sampling data. These further sets of sampling data are obtained by sampling the signals $x(t)$, $y(t)$ at further time instances.

In the discrete time domain, a further set of sampling data obtained from the signal $x(t)$ can be expressed as $x(n + l \cdot N)$, where $l$ is the index of set of sampling data varying within the range $l = 0...L - 1$, while $L$ typically has the value 256.

A time-discrete representation of a further set of sampling data is then given as $y(n + l \cdot N)$.

For each set of sampling data $x(n + l \cdot N)$ the discrete frequency values are then given by

$$X(l,k) = DFT(x(n + l \cdot N))$$

while for each set of sampling data $y(n + l \cdot N)$ the discrete frequency values are given by

$$Y(l,k) = DFT(y(n + l \cdot N)).$$

Power-spectral densities for the different sets of sampling data can then be obtained as

$$Z_{c1}(l,m) = X\left(l, \frac{N}{4} + m\right) X^*\left(l, \frac{3N}{4} + m\right)$$

and

$$Z_{c2}(l,m) = Y\left(l, \frac{N}{4}(m) + m\right) Y^*\left(l, \frac{3N}{4} + m\right),$$

while cross-spectral densities can be obtained for each set as

$$Z_{x1}(l,m) = X\left(l,\frac{N}{4}+m\right)Y^*\left(l,\frac{3N}{4}+m\right)$$

and

$$Z_{x2}(l,m) = Y\left(l,\frac{N}{4}+m\right)X^*\left(l,\frac{3N}{4}+m\right).$$

Preferably, these spectral densities are then normalized as previously described above.

Averaged power and cross spectral densities are then obtained by averaging over the different sets via

$$Z_c(m) = \frac{1}{2L}\sum_L \left[\exp\left[j\,\arg(Z_{c1}(l,m)\right] + \exp\left[j\,\arg(Z_{c2}(l,m))\right]\right]$$

and

$$Z_x(m) = \frac{1}{2L}\sum_L \left[\exp\left[j\,\arg(Z_{x1}(l,m)\right] + \exp\left[j\,\arg(Z_x(l,m))\right]\right].$$

Weighting of the averaged power- and cross- spectral densities can then be carried out for obtaining an estimated phase

$$\phi(m) = \left(\arg\left[\frac{1}{2}\left[w_c Z_c(m) + w_x Z_x(m)\right]\right]\right)$$

wherein the weighting coefficients are given as

$$w_c = \frac{1}{4LN}\sum_{m=0}^{M-1}\sum_L \left[|Z_{c1}(l,m)| + |Z_{c2}(l,m)|\right],$$

$$w_x = \frac{1}{4LN}\sum_{m=0}^{M-1}\sum_L \left[|Z_{x1}(l,m)| + |Z_{x2}(l,m)|\right].$$

Furthermore, in order to take into account also phase components lying out of the range of

$$0\ldots f_{SA} \equiv 0\ldots N$$

one can determine the phase $\phi(m)$ as previously described above via

$$\phi(m) = unwrap\left(\arg\left[\frac{1}{2}\left[Z_c(m) + Z_x(m)\right]\right]\right)$$

for increasing the reliability of the estimated phase.

For reducing the computational complexity of the proposed method, corresponding sets of sampling data $x(n + l \cdot N)$, $y(n + l \cdot N)$ are selected by selecting certain values of $l$ from the range $l = 0...L$, leading to a set of selected indices $l \in \Lambda$. Then, the different steps of the proposed method are carried out relying only on those sets of sampling data $x(n$

$+ l \cdot N), y(n + l \cdot N)$ for which $l \in \Lambda$.

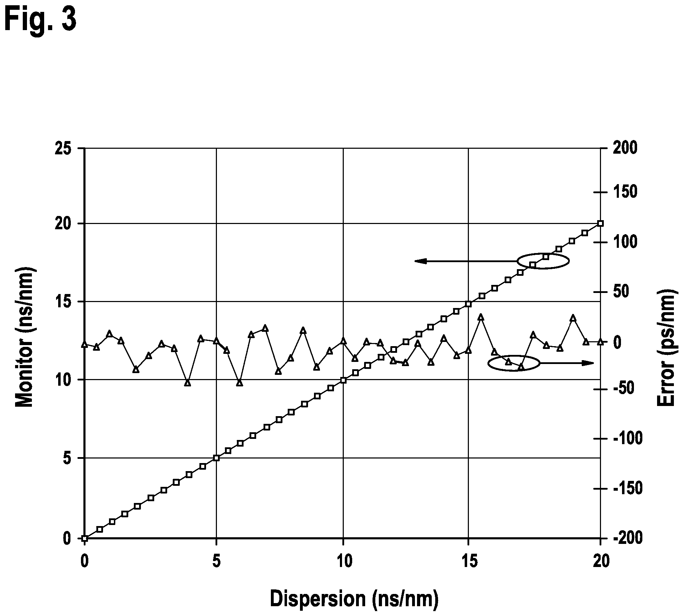

Figure 3 shows normalized time delays $\tau(m)$ obtained from estimated phases $\phi(m)$ for different spectral lines within the range m=0 to 32 for different dispersion values at an overall signal-to-noise ratio of 15db . Exploiting the averaging over different sets of sampling data, wherein $l = 256$ , with a set of sampling data having $n = 1024$, the shown results have been obtained. The different dispersion values are 10 ns/nm, -10 ns/nm, 20 ns/nm and -20 ns/nm. For each of these dispersion values the estimated normalized time delays are furthermore accompanied by a corresponding linear function for which an overall error between the function and the corresponding time delays has been minimized.

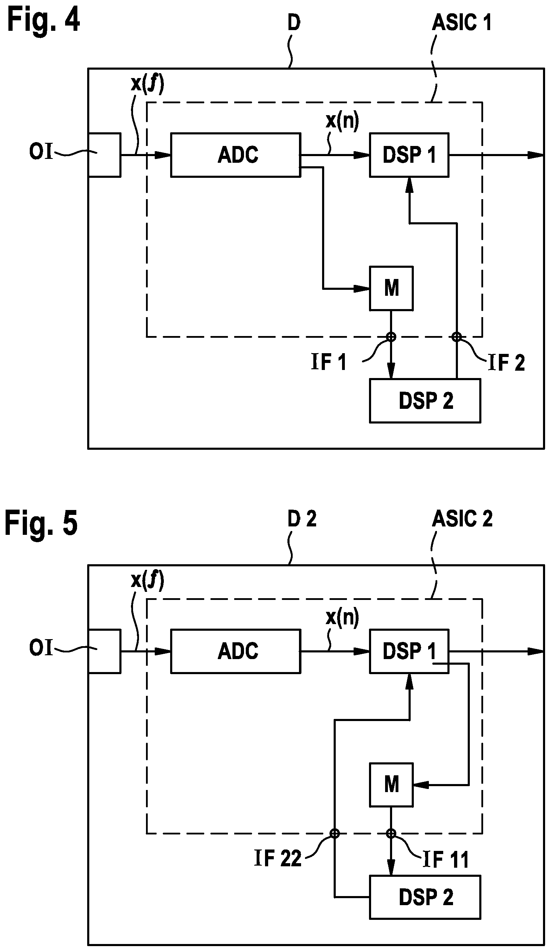

Figure 4 shows estimated chromatic dispersion values within the range from 0 to 20 ns/nm on the ordinate together with the actual chromatic dispersion values along the abscissa. Furthermore, for each estimated dispersion value, the estimation error is given within the range of ps/nm. The results demonstrate, that using the proposed method, a very reliable estimate for the actual chromatic dispersion of an optical channel can be obtained.

Fig. 5 shows a device D for determining a dispersion of an optical channel according to a first embodiment. The device D contains an optical interface OI which is adapted to receive an optical signal. The optical interface OI is connected to an analogue digital converter ADC, which is adapted to generate a set of sampling data by sampling the optical signal. Furthermore, the device D contains a memory device M that is adapted to store sampling data. According to this embodiment, the analogue digital converter ADC directly writes sets of sampling data into the memory device M. From the memory device M, a digital signal processor DSP2 reads out at least one set of sampling data and determines from the set of sampling data a phase at a first frequency as previously described above. Furthermore, the digital signal processor DSP2 determines a dispersion C based on the estimated phase at the first frequency. The digital signal processor DSP2 then passes on the estimated value for the dispersion C to another digital signal processor DSP1, which then filters the sampled optical signals by a transfer function which is inverse to the transfer function of the dispersive optical channel. Preferably, the analogue digital converter ADC, the memory M and the digital signal processor DSP1 are integrated within an Application Specific Integrated Circuit ASIC1, providing interfaces IF1, IF2 for the signal processor DSP2 for reading the sampling data from the memory M and for passing on the estimated dispersion value C to the signal processor DSP1.

Fig. 6 shows an alternative embodiment of a device D2 for determining dispersion of an optical channel. The difference between the device D and the device D2 is, that the sampling data is first filtered by the signal processor DSP1 by a filter function assuming a dispersion value $C_{filt} = C_{DSP1}$. Then, the filtered sampling data is written into the memory M by the signal processor DSP1 after filtering. The signal processor DSP2 reads out at least one set of the filtered sampling data from the memory M and estimates a dispersion $C_{DSP2}$, which is an estimate of the residual dispersion remaining in the sampling data after filtering it within the signal processor DSP1. The signal processor DSP2 then passes the estimated residual dispersion $C_{DSP2}$ on to the signal processor DSP1. The signal processor DSP1 then uses in a next cycle of filtering the sampling data a filter function based on the dispersion value

$$C_{filt} = C_{DSP1} + C_{DSP2}.$$

Preferably, the analogue digital converter ADC, the memory M and the digital signal processor DSP1 are integrated within an Application Specific Integrated Circuit ASIC2, providing interfaces IF11, IF22 for the signal processor DSP2 for reading the sampling data from the memory M and for passing on the estimated dispersion value $C_{DSP2}$ to the signal processor DSP1 .

**Claims**

1. Method of determining a chromatic dispersion of an optical channel, comprising the steps of

   a) receiving an optical signal transmitted via an optical transmission channel,
   b) generating a first set of sampling data $x(n)$ by sampling said optical signal at a sampling rate $f_{SA}$ leading to a set of sampling data as

$$x(n) \quad , n = 0 \ldots N - 1 , N \in \mathbb{N} ,$$

   wherein n is the discrete time-index of the sets of sampling data and wherein N is the size of the set of sampling data,

d) determining via a spectral transform for said first set of sampling data $x(n)$

 - a complex discrete frequency component at a first frequency $f_1$, and
 - a complex discrete frequency component at a second frequency $f_2$,

wherein said second frequency $f_2$ is chosen such that it differs from said first frequency $f_1$ by a symbol rate $f_{SR}$ of said optical signal, wherein the symbol rate $f_{SR}$ of the optical signal is defined by the number of samples $x(n)$ representing a transmitted symbol, such that $f_{SR} = k/N * f_{SA}$, with $k \in$ N,

e) determining a phase value based on said complex discrete frequency components of said first set of sampling data $x(n)$,

f) determining a chromatic dispersion value C based on said phase value.

2. Method according to claim 1,
wherein in step b) said optical signal is sampled in a first polarization plane,
comprising the further steps of

 g) generating a second set of sampling data $y(n)$ by sampling said optical signal in a second polarization plane,
 h) determining via said spectral transform for said second set of sampling data $y(n)$

 - a complex discrete frequency component at said first frequency $f_1$, and
 - a complex discrete frequency component at said second frequency $f_2$,

 i) determining said phase value based on said complex discrete frequency components of said first and said second set of sampling data $x(n)$, $y(n)$.

3. Method according to claim 2,
comprising the further steps of

 j) determining via said spectral transform for said first set of sampling data $x(n)$

 - a complex discrete frequency component at a third frequency $f_3$, and
 - a complex discrete frequency component at a fourth frequency $f_4$,

 wherein said fourth frequency $f_4$ is chosen such that it differs from said third frequency $f_3$ by said symbol rate $f_{SR}$,
 k) determining via said spectral transform for said second set of sampling data $y(n)$

 - a complex discrete frequency component at said third frequency $f_3$, and
 - a complex discrete frequency component at said fourth frequency $f_4$,

 l) determining a further phase value based on

 - said complex discrete frequency components at said third frequency $f_3$ of said first and said second set of sampling data $x(n)$, $y(n)$, and
 - said complex discrete frequency components at said fourth frequency $f_4$ of said first and said second set of sampling data $x(n)$, $y(n)$,

 m) determining said chromatic dispersion value C based on said first phase value and said further phase value.

4. Method according to claim 3,
wherein said chromatic dispersion value C is determined by fitting a function representing the dependency of the phase from the chromatic dispersion value C to said determined phase values.

5. Method according to any of the claims 2 to 4,
wherein said step i) comprises the sub-steps of

 i1) determining

 - a first power spectral density from said complex discrete frequency components of said first set, and

- a second power spectral density from said complex discrete frequency components of said second set,

i2) determining

- a first cross spectral density, and
- a second cross spectral density,

from said complex discrete frequency components of said first and said second set of sampling data,
i3) obtaining an average power spectral density from said first and said second power spectral density,
i4) obtaining an average cross spectral density from said first and said second cross spectral density,
i5) determining said phase value based on said averaged power spectral density and said averaged cross spectral density.

6. Method according to claim 5,
wherein said sub-step i3) includes normalizing said first and said second power spectral density,
and wherein said sub-step i4) includes normalizing said first and said second cross spectral density.

7. Method according to claim 5 or 6,
wherein said sub-step i5) includes weighting of said averaged power spectral density and said averaged cross spectral density by respective weighting coefficients, wherein said weighting coefficients are functions of said frequency components of said first and said second set.

8. Method according to any of the claims 1 to 7,
comprising the further steps of

m) generating first further sets of sampling data by sampling said optical signal in said first polarization plane,
n) generating second further sets of sampling data by sampling said optical signal in said second polarization plane,
p) determining via said spectral transform for each of said first further sets corresponding complex discrete frequency components at said frequencies, and determining via said spectral transform for each of said second further sets corresponding complex discrete frequency components at said frequencies,

wherein in step i) said phase value is determined based on said complex discrete frequency components at said first and said second frequency of said further sets,
and wherein in step l) said further phase value is determined based on said frequency components at said third and said fourth frequency of said further sets.

9. Method according to any of the claims 1 to 8,
wherein prior to said step d) said first sampling data and said second sampling data is filtered by a filter function for compensating a chromatic dispersion of said optical transmission channel, and wherein said chromatic dispersion value determined in any of the preceding claims is a residual dispersion value.

10. Device for determining a chromatic dispersion of an optical channel comprising

- an optical interface (OI) adapted to receive an optical signal,
- a memory device (M) adapted to store sampling data,
- an analogue-digital-converter (ADC) adapted

  ◦ to generate a set of sampling data by sampling said optical signal according to step b of claim 1, and

- at least one digital signal processing device (DSP1, DSP2) adapted

  ◦ to read said at least one set of sampling data from said memory device (M), and
  ◦ to carry out the steps d), e) and f) of claim 1.

**Patentansprüche**

1. Verfahren zum Bestimmen einer chromatischen Dispersion eines optischen Kanals, die folgenden Schritte umfassend

   a) Empfangen eines optischen Signals, das mittels eines optischen Übertragungskanals übertragen wird,
   b) Erzeugen eines ersten Satzes von Abtastdaten $x(n)$ durch Abtasten besagten optischen Signals mit einer Abtastrate $f_{SA}$ was zu einem Satz von Abtastdaten

$$x(n),\ n = 0\ldots N - 1,\ N \in \mathrm{N},$$

   führt, wobei n der diskrete Zeitindex der Sätze von Abtastdaten ist und wobei N die Größe des Satzes von Abtastdaten ist,
   d) Bestimmen über eine spektrale Transformation für besagten ersten Satz von Abtastdaten $x(n)$

   - einer komplexen diskreten Frequenzkomponente bei einer ersten Frequenz $f_1$, und
   - einer komplexen diskreten Frequenzkomponente bei einer zweiten Frequenz $f_2$, wobei besagte zweite Frequenz $f_2$ so ausgewählt wird, dass sie sich von besagter erster Frequenz $f_1$ durch eine Symbolrate $f_{SR}$ von besagtem optischen Signal unterscheidet, wobei die Symbolrate $f_{SR}$ des optischen Signals definiert ist durch die Anzahl von Mustern $x(n)$, die ein übertragenes Symbol darstellen, sodass $f_{SR}$ = k/N * $f_{SA}$, mit $k \in \mathrm{N}$,

   e) Bestimmen eines Phasenwerts auf Grundlage besagter komplexer diskreter Frequenzkomponenten von besagtem ersten Satz von Abtastdaten $x(n)$,
   f) Bestimmen eines chromatischen Dispersionswerts C auf Grundlage von besagtem Phasenwert.

2. Verfahren nach Anspruch 1,
   wobei in Schritt b) das besagte optische Signal in einer ersten Polarisationsebene abgetastet wird, weiterhin die folgenden Schritte umfassend

   g) Erzeugen eines zweiten Satzes von Abtastdaten $y(n)$ durch Abtasten besagten optischen Signals in einer zweiten Polarisationsebene,
   h) Bestimmen über besagte spektrale Transformation für besagten zweiten Satz von Abtastdaten $y(n)$

   - einer komplexen diskreten Frequenzkomponente bei besagter ersten Frequenz $f_1$, und
   - einer komplexen diskreten Frequenzkomponente bei besagter zweiten Frequenz $f_2$,

   i) Bestimmen besagten Phasenwerts auf Grundlage besagter komplexer diskreter Frequenzkomponenten von besagtem ersten Satz und besagtem zweiten Satz von Abtastdaten $x(n), y(n)$.

3. Verfahren nach Anspruch 2,
   weiterhin die folgenden Schritte umfassend

   j) Bestimmen über besagte spektrale Transformation für besagten ersten Satz von Abtastdaten $x(n)$

   - einer komplexen diskreten Frequenzkomponente bei einer dritten Frequenz $f_3$, und
   - einer komplexen diskreten Frequenzkomponente bei einer vierten Frequenz $f_4$, wobei besagte vierte Frequenz $f_4$ so ausgewählt wird, dass sie sich von besagter dritter Frequenz $f_3$ durch besagte Symbolrate $f_{SR}$ unterscheidet,

   k) Bestimmen über besagte spektrale Transformation für besagten zweiten Satz von Abtastdaten $y(n)$

   - einer komplexen diskreten Frequenzkomponente bei besagter dritten Frequenz $f_3$ und
   - einer komplexen diskreten Frequenzkomponente bei besagter vierten Frequenz $f_4$, l) Bestimmen eines weiteren Phasenwerts auf Grundlage von
   - besagten komplexen diskreten Frequenzkomponenten bei besagter dritter Frequenz $f_3$ von besagtem

ersten und besagtem zweiten Satz von Abtastdaten *x(n)*, *y(n)*, und
- besagten komplexen diskreten Frequenzkomponenten bei besagter vierten Frequenz $f_4$ von besagtem ersten und besagtem zweiten Satz von Abtastdaten *x(n)*, *y(n)*,

m) Bestimmen besagten chromatischen Dispersionswerts C auf Grundlage besagten ersten Phasenwerts und besagten weiteren Phasenwerts.

4. Verfahren nach Anspruch 3,
wobei besagter chromatischer Dispersionswert C bestimmt wird durch Anpassen einer Funktion, die die Abhängigkeit der Phase von dem chromatischen Dispersionswert C darstellt, an die besagten bestimmten Phasenwerte.

5. Verfahren nach einem beliebigen der Ansprüche 2 bis 4,
wobei besagter Schritt i) die folgenden Unterschritte umfasst

i1) Bestimmen

- einer ersten spektralen Leistungsdichte aus besagten komplexen diskreten Frequenzkomponenten von besagtem ersten Satz, und
- einer zweiten spektralen Leistungsdichte aus besagten komplexen diskreten Frequenzkomponenten von besagtem zweiten Satz,

i2) Bestimmen

- einer ersten Kreuzspektraldichte, und
- einer zweiten Kreuzspektraldichte,

aus besagten komplexen diskreten Frequenzkomponenten von besagtem ersten und besagtem zweiten Satz von Abtastdaten,
i3) Erhalten einer durchschnittlichen spektralen Leistungsdichte aus besagter ersten und besagter zweiten spektralen Leistungsdichte,
i4) Erhalten einer durchschnittlichen spektralen Leistungsdichte aus besagter ersten und besagter zweiten Kreuzspektraldichte,
i5) Bestimmen besagten Phasenwerts auf Grundlage besagter durchschnittlicher spektraler Leistungsdichte und besagter durchschnittlicher Kreuzspektraldichte.

6. Verfahren nach Anspruch 5,
wobei besagter Unterschritt i3) die Normalisierung besagter ersten und besagter zweiten spektralen Leistungsdichte einschließt,
und wobei besagter Unterschritt i4) die Normalisierung besagter erster und besagter zweiter Kreuzspektraldichte einschließt.

7. Verfahren nach Anspruch 5 oder 6,
wobei besagter Unterschritt i5) das Wichten von besagter durchschnittlichen spektralen Leistungsdichte und besagter durchschnittlichen Kreuzspektraldichte durch entsprechende Wichtungskoeffizienten einschließt, wobei besagte Wichtungskoeffizienten Funktionen besagter Frequenzkomponenten von besagtem ersten und besagtem zweiten Satz sind.

8. Verfahren nach einem beliebigen der Ansprüche 1 bis 7,
die folgenden weiteren Schritte umfassend

m) Erzeugen von ersten weiteren Sätzen von Abtastdaten durch Abtasten besagten optischen Signals in besagter ersten Polarisationsebene,
n) Erzeugen von zweiten weiteren Sätzen von Abtastdaten durch Abtasten besagten optischen Signals in besagter zweiten Polarisationsebene,
p) Bestimmen über besagte spektrale Transformation für jeden der besagten ersten weiteren Sätze entsprechender komplexer diskreter Frequenzkomponenten, und Bestimmen über besagte spektrale Transformation für jeden der besagten zweiten weiteren Sätze entsprechender komplexer diskreter Frequenzkomponenten bei besagten Frequenzen,

wobei in Schritt i) besagter Phasenwert auf Grundlage besagter komplexer diskreter Frequenzkomponenten von besagter erster und besagter zweiter Frequenz von besagten weiteren Sätzen bestimmt wird
und wobei in Schritt l) besagter weiterer Phasenwert auf Grundlage besagter Frequenzkomponenten von besagter dritter und besagter vierter Frequenz von besagten weiteren Sätzen bestimmt wird.

**9.** Verfahren nach einem beliebigen der Ansprüche 1 bis 8,
wobei vor besagtem Schritt d) besagte erste Abtastdaten und besagte zweite Abtastdaten gefiltert werden durch eine Filterfunktion zum Kompensieren einer chromatischen Dispersion von besagtem optischen Übertragungskanal, und wobei besagter chromatischer Dispersionswert, der in einem beliebigen der vorhergehenden Ansprüche bestimmt wird, ein verbleibender Dispersionswert ist.

**10.** Vorrichtung zum Bestimmen einer chromatischen Dispersion eines optischen Kanals,
umfassend:

  - eine optische Schnittstelle (OI), die ausgelegt ist zum Empfangen eines optischen Signals,
  - eine Speichervorrichtung (M), die ausgelegt ist zum Speichern von Abtastdaten,
  - einen Analog-Digital-Wandler (ADC), der ausgelegt ist

    ◦ zum Erzeugen eines Satzes von Abtastdaten durch Abtasten besagten optischen Signals gemäß Schritt b von Anspruch 1,

  - mindestens eine digitale Signalverarbeitungsvorrichtung (DSP1, DSP2), die ausgelegt ist

    ◦ zum Ablesen besagten mindestens einen Satzes von Abtastdaten von besagter Speichervorrichtung (M), und
    ◦ zum Ausführen der Schritte d), e) und f) von Anspruch 1.

## Revendications

**1.** Procédé de détermination de la dispersion chromatique d'un canal optique, comprenant les étapes suivantes :

  a) recevoir un signal optique transmis via un canal de transmission optique,
  b) générer un premier ensemble de données d'échantillonnage $x(n)$ en échantillonnant ledit signal optique à une fréquence d'échantillonnage $f_{SA}$ conduisant à un ensemble de données d'échantillonnage tel que

$$x(n), n = 0 \ldots N - 1, N \in \mathrm{N},$$

  où $n$ est l'indice temporel discret des ensembles de données d'échantillonnage et où N est la taille de l'ensemble de données d'échantillonnage,
  d) déterminer via une transformée spectrale pour ledit premier ensemble de données d'échantillonnage $x(n)$

    - une composante de fréquence discrète complexe à une première fréquence $f_1$, et
    - une composante de fréquence discrète complexe à une deuxième fréquence $f_2$, ladite deuxième fréquence $f_2$ étant choisie de sorte qu'elle diffère de ladite première fréquence $f_1$ par un débit de symboles $f_{SR}$ dudit signal optique, le débit de symbole $f_{SR}$ du signal optique étant défini par le nombre d'échantillons $x(n)$ représentant un symbole transmis, de sorte que $f_{SR} = k/N * f_{SA}$, avec $k \in \mathrm{N}$,

  e) déterminer une valeur de phase en fonction desdites composantes de fréquence discrètes complexes dudit premier ensemble de données d'échantillonnage x$(n)$,
  f) déterminer une valeur de dispersion chromatique C en fonction de ladite valeur de phase.

**2.** Procédé selon la revendication 1,
dans lequel à l'étape b) ledit signal optique est échantillonné dans un premier plan de polarisation, comprenant en outre les étapes suivantes :

g) générer un deuxième ensemble de données d'échantillonnage *y(n)* en échantillonnant ledit signal optique dans un deuxième plan de polarisation,

h) déterminer via ladite transformée spectrale pour ledit deuxième ensemble de données d'échantillonnage *y(n)*

- une composante de fréquence discrète complexe à ladite première fréquence $f_1$, et
- une composante de fréquence discrète complexe à ladite deuxième fréquence $f_2$,

i) déterminer ladite valeur de phase en fonction des composantes de fréquence discrètes complexes desdits premier et deuxième ensembles de données d'échantillonnage *x(n)*, *y(n)*.

3. Procédé selon la revendication 2,
comprenant en outre les étapes suivantes :

j) déterminer via ladite transformée spectrale pour ledit premier ensemble de données d'échantillonnage *x(n)*

- une composante de fréquence discrète complexe à une troisième fréquence $f_3$, et
- une composante de fréquence discrète complexe à une quatrième fréquence $f_4$, ladite quatrième fréquence $f_4$ étant choisie de sorte qu'elle diffère de ladite troisième fréquence $f_3$ par ledit débit de symboles $f_{SR}$.

k) déterminer via ladite transformée spectrale pour ledit deuxième ensemble de données d'échantillonnage *y(n)*

- une composante de fréquence discrète complexe à ladite troisième fréquence $f_3$, et
- une composante de fréquence discrète complexe à ladite quatrième fréquence $f_4$,

l) déterminer une autre valeur de phase en fonction

- desdites composantes de fréquence discrètes complexes à ladite troisième fréquence $f_3$ dudit premier et dudit deuxième ensembles de données d'échantillonnage *x(n)*, *y(n)*, et
- desdites composantes de fréquence discrètes complexes à ladite quatrième fréquence $f_4$ dudit premier et dudit deuxième ensembles de données d'échantillonnage *x(n)*, *y(n)*,

m) déterminer ladite valeur de dispersion chromatique C en fonction de ladite première valeur de phase et de ladite autre valeur de phase.

4. Procédé selon la revendication 3,
dans lequel ladite valeur de dispersion chromatique C est déterminée en ajustant une fonction représentant la dépendance de la phase de la valeur de dispersion chromatique C auxdites valeurs de phase déterminées.

5. Procédé selon l'une quelconque des revendications 2 à 4,
dans lequel ladite étape i) comprend les sous-étapes suivantes :

i1) déterminer

- une première densité spectrale de puissance à partir desdites composantes de fréquence discrètes complexes dudit premier ensemble, et
- une deuxième densité spectrale de puissance à partir desdites composantes de fréquence discrètes complexes dudit deuxième ensemble,

i2) déterminer

- une première densité spectrale croisée, et
- une deuxième densité spectrale croisée,

à partir desdites composantes de fréquence discrètes complexes dudit premier et dudit deuxième ensembles de données d'échantillonnage,
i3) obtenir une densité spectrale de puissance moyenne à partir de ladite première et de ladite deuxième densités spectrales de puissance,
i4) obtenir une densité spectrale croisée moyenne à partir de ladite première et de ladite deuxième densités spectrales croisées,
i5) déterminer ladite valeur de phase en fonction de ladite densité spectrale de puissance moyennée et de ladite densité spectrale croisée moyennée.

**6.** Procédé selon la revendication 5,
dans lequel ladite sous-étape i3) inclut la normalisation de ladite première et de ladite deuxième densités spectrales de puissance,
et dans lequel ladite sous-étape i4) inclut la normalisation de ladite première et de ladite deuxième densités spectrales croisées.

**7.** Procédé selon la revendication 5 ou 6,
dans lequel ladite sous-étape i5) inclut la pondération de ladite densité spectrale de puissance moyennée et de ladite densité spectrale croisée moyennée par des coefficients de pondération respectifs, lesdits coefficients de pondération étant des fonctions desdites composantes de fréquence dudit premier et dudit deuxième ensembles.

**8.** Procédé selon l'une quelconque des revendications 1 à 7, comprenant en outre les étapes suivantes :

m) générer des premiers autres ensembles de données d'échantillonnage en échantillonnant ledit signal optique dans ledit premier plan de polarisation,
n) générer des deuxièmes autres ensembles de données d'échantillonnage en échantillonnant ledit signal optique dans ledit deuxième plan de polarisation,
p) déterminer via ladite transformée spectrale pour chacun desdits premiers autres ensembles les composantes de fréquence discrètes complexes correspondantes auxdites fréquences, et déterminer via ladite transformée spectrale pour chacun desdits deuxièmes autres ensembles les composantes de fréquence discrètes complexes correspondantes auxdites fréquences,

à l'étape i) ladite valeur de phase étant déterminée en fonction desdites composantes de fréquence discrètes complexes à ladite première et à ladite deuxième fréquences desdits autres ensembles, et
à l'étape l) ladite autre valeur de phase étant déterminée en fonction desdites composantes de fréquence à ladite troisième et à ladite quatrième fréquences desdits autres ensembles.

**9.** Procédé selon l'une quelconque des revendications 1 à 8,
dans lequel avant ladite étape d) lesdites premières données d'échantillonnage et lesdites deuxièmes données d'échantillonnage sont filtrées par une fonction de filtre pour compenser la dispersion chromatique dudit canal de transmission optique, et dans lequel ladite valeur de dispersion chromatique déterminée selon l'une quelconque des revendications précédentes est une valeur de dispersion résiduelle.

**10.** Dispositif de détermination de la dispersion chromatique d'un canal optique comprenant

- une interface optique (OI) adaptée pour recevoir un signal optique,
- un dispositif de mémoire (M) adapté pour stocker les données d'échantillonnage,
- un convertisseur analogique-numérique (ADC) adapté

  ∘ pour générer un ensemble de données d'échantillonnage en échantillonnant ledit signal optique selon l'étape b) de la revendication 1,

- au moins un dispositif de traitement de signal numérique (DSP1, DSP2) adapté

  ∘ pour lire ledit ou lesdits ensembles de données d'échantillonnage à partir dudit dispositif de mémoire (M), et
  ∘ réaliser les étapes d), e) et f) de la revendication 1.

# Fig. 1

# Fig. 2

# Fig. 3

**Fig. 4**

**Fig. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6088088 A